# EUROPEAN PATENT SPECIFICATION

(11) **EP 2 837 277 B1**
(45) Date of publication and mention of the grant of the patent: **03.05.2017**
(21) Application number: 14179068.3
(22) Date of filing: 30.07.2014
(51) Int. Cl.: A01B 63/118, B60D 1/36, B60D 1/62

(54) **Positioning system of an agricultural tractor**
Positionierungssystem eines landwirtschaftlichen Traktors
Système de positionnement d'un tracteur agricole

(30) Priority: 15.08.2013 US 201313967810
(43) Date of publication of application: 18.02.2015
(73) Proprietor: Deere & Company, Moline, IL 61265 (US)
(72) Inventor: Buerkle, Bryan K, Cedar Falls, IA Iowa 50613 (US); Myers, Christopher A, Cedar Falls, IA Iowa 50613 (US)
(74) Representative: Dehnhardt, Florian Christopher

(56) References cited:
- EP-A1- 2 433 482
- JP-A- H07 184 406
- US-A- 5 190 118
- US-A- 6 015 019

## Description

The present invention relates to a positioning system of an agricultural tractor.

Connecting an agricultural tractor to an implement with a hitch pin can sometimes be time consuming if the agricultural tractor and the implement are not aligned. Often, an operator must visually check for the alignment which requires the operator to exit the agricultural tractor and make this determination. If not aligned, the agricultural tractor must be repositioned to the implement accordingly. Sometimes, the agricultural tractor and the implement are slightly misaligned, wherein the hitch pin does not properly seat in a clevis of the hitch. In situations such as this, the operator may have to again reposition the agricultural tractor. It would be beneficial to provide a positioning system which allows to manipulate the agricultural tractor from the ground near the hitch to allow the hitch pin to drop poperly into place.

From US 8 322 482 B2 a positioning system is known which includes positioning controls outside of an operator station of an agricultural tractor that can be actuated by an operator while maintaining contact with the agricultural tractor to move the agricultural tractor forward or reverse to connect an implement. There is a need which lets an operator steer as well as move the agricultural tractor forward and reverse.

These and other objects are achieved by the present invention, wherein a positioning system of an agricultural tractor is provided. The positioning system comprises positioning controls on the agricultural tractor outside an operator station of the agricultural tractor and adjacent to a hitch. The positioning controls include a forward switch, a reverse switch, a left switch and a right switch. An electronic controller is electrically connected to the positioning controls and connected to a propulsion and steering system of the agricultural tractor. The electronic controller moves the agricultural tractor forward in response to actuation of the forward switch, the electronic controller moves the agricultural tractor reverse in response to actuation of the reverse switch, the electronic controller steers the agricultural tractor left in response to actuation of the left switch, and the electronic controller steers the agricultural tractor right in response to actuation of the right switch.

This allows an operator to accurately position and align the hitch by manipulating the positioning control to very slowly and precisely move the agricultural tractor. Upon discovering that the hitch is not aligned with an implement to be coupled to the hitch, an operator can perform minute adjustments outside the operator station by means of the positioning controls.

For a complete understanding of the objects, techniques, and structure of the invention reference should be made to the following detailed description and accompanying drawings, wherein similar components are designated by identical reference numerals:
- Fig. 1: is a rear view of an agricultural tractor with a positioning system according to an embodiment of the invention,
- Fig. 2: is an enlarged view of positioning controls being part of the positioning system shown in Fig. 1,
- Fig. 3: is a schematic block diagram of the positioning system shown in Fig. 1, and
- Fig. 4: is a flow chart of an algorithm performed by an electronic coltroller of the positioning system shown in Fig. 3.

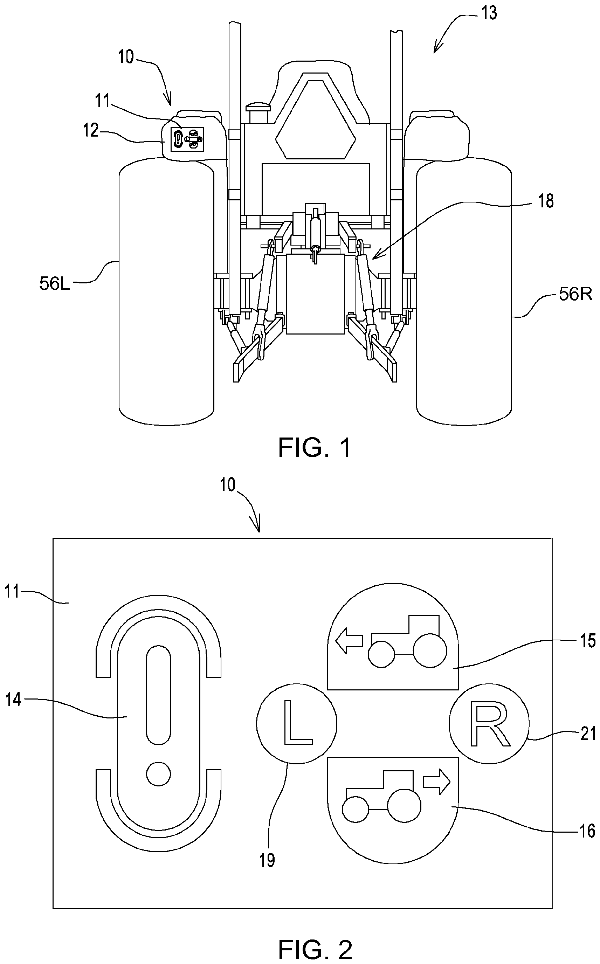

Referring to Figs. 1 and 2, a positioning system 10 includes positioning controls 11 located on an outer surface of an agricultural tractor 13 outside an operator station. For example, the positioning controls 11 are located at the rear of the agricultural tractor 13, preferably on a rear fender 12 or other outer surface within reach of an operator who is standing on the ground while the operator also can reach a hitch 18 in the form of a three-point hitch of the agricultural tractor 13. While on the ground, the operator can actuate the positioning controls 11 to move the agricultural tractor 13 slowly over short distances into position for connecting an implement (not shown) to the agricultural tractor 13. The positioning controls 11 are mounted on a location on the agricultrual tractor 13 where implement attachment is done. The positioning controls 11 allow the operator to move the agricultural tractor 13 while being in close proximity to the task being performed.

The positioning controls 11 include a forward switch 15, a reverse switch 16, a left switch 19 and a right switch 21. The switches 15, 16, 19 and 21 are preferably normally off, push-button type switches. The positioning controls 11 may be any switch, button or other momentary contact that an operator must continuously press to remain actuated. Only one of the forward switch 15 and reverse switch 16 may be actuated at a given time. Only one of the left switch 19 and right switch 21 may be actuated at a given time. For example, the forward and reverse switches 15 and 16 may be configured as a toggle switch with a spring to return to a neutral position, when neither switch 15 or 16 is actuated. Also, the left and right switches 19 and 21 may be configured as a toggle switch with a spring to return to a neutral position, when neither switch 19 or 21 is actuated.

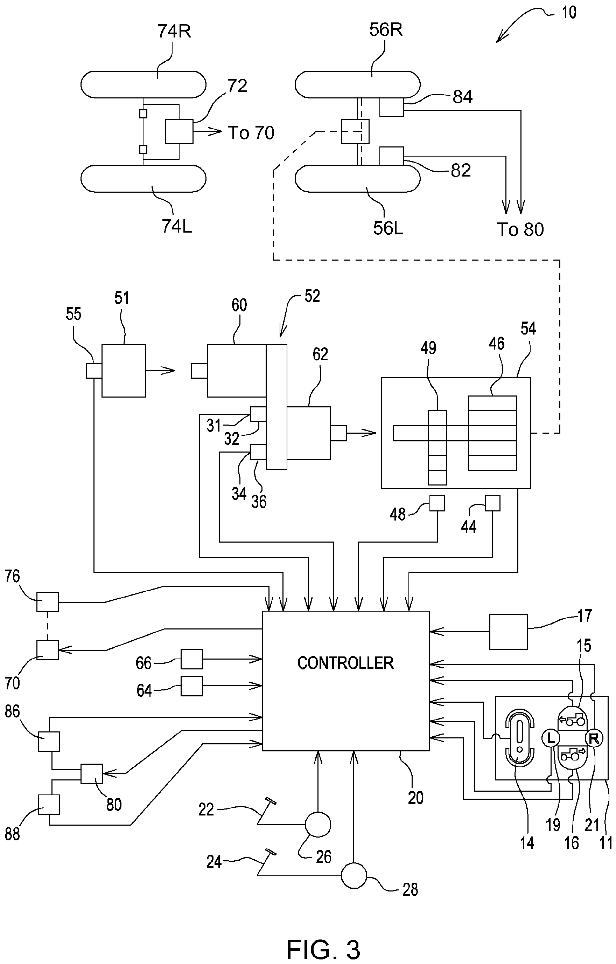

Referring now to Fig. 3, positioning system 10 is used with an agricultural tractor 13 having a propulsion system which includes an engine 51 which rotationally drives a hydrostatic transmission 52. The hydrostatic transmission 52 includes a variable displacement hydrostatic pump 60 and a hydraulic motor 62. The hydrostatic transmission 52 drives a multi-speed gear transmission 54, for transmitting power to one or more driven wheels 56L and 56R. The actual ground speed is controlled by adjustment of the speed output of the hydrostatic transmission 52.

For normal operation of the agricultural tractor 13 from the operator station, the operator uses forward pedal 22 and reverse pedal 24. The forward pedal 22 is operatively engaged with potentiometer 26 to produce a forward pedal position signal, and the reverse pedal 24 is operatively engaged with potentiometer 28 to produce a reverse pedal position signal. The potentiometers 26 and 28 are signal-connected to an electronic controller 20.

The electronic controller 20, such as a microprocessor-based microcontroller, is signal-connected, through signal conditioning or amplifying circuitry, to solenoid 31 of forward drive proportional pressure control valve 32 and to solenoid 34 of reverse drive proportional pressure control valve 36. The output current to energize the forward or reverse drive proportional pressure control valves 32 and 36 is substantially proportional to the corresponding forward and reverse position signals from the potentiometers 26 and 28 respectively.

Before operating the positioning system 10, the electronic controller 20 determines that at least one or more system checks are satisfied. For example, the system checks are in the form of switch or electronic signals that electronic controller 20 receives from other devices on the agricultural tractor 13. For example, the system checks require a seat switch 64 to detect the absence of a seated operator at the operator station of the agricultural tractor 13. In other words, the positioning system 10 is not actuated to move the agricultural tractor 13 if an operator is seated at the operator station. The system checks also include park brake switch 66 to detect a park brake is engaged. The park brake remains engaged while the positioning system 10 causes the agricultural tractor 13 to move slowly in forward or reverse. Additionally, the system checks require forward pedal 22 and reverse pedal 24 to be at home, and not be actuated. The system checks require the speed of engine 51 to be under a specified value such as 1200 rpm. The system checks require multi-speed gear transmission 54 to be in a specified low range such as an "A" range. The system checks require one or more rotation speed sensors 44 and 48 to be working and operational, and require the actual ground speed of the agricultural tractor 13 to be zero. Thus, the electronic controller 20 does not permit the positioning controls 11 to cause the multi-speed gear transmission 54 or other device to move the agricultural tractor 13 in forward or reverse at the desired ground speed until and unless one or more of the system checks are and remain satisfied.

The positioning system 10 includes a conventional electro-hydraulic steering control valve 70 which is controlled by the electronic controller 20. The electro-hydraulic steering control valve 70 controls a conventional steering actuator 72 which turns steerable wheels 74L and 74R, and a steering sensor 76 provides a steering angle signal to the electronic controller 20.

The positioning system 10 also includes a conventional electro-hydraulic brake control valve 80 which is controlled by the electronic controller 20. The electro-hydraulic brake control valve 80 controls left and right brakes 82 and 84 for the driven wheels 56L and 56R. A left brake sensor 86 provides a left brake signal to the electronic controller 20, and a right brake sensor 88 provides a right brake signal to the electronic controller 20.

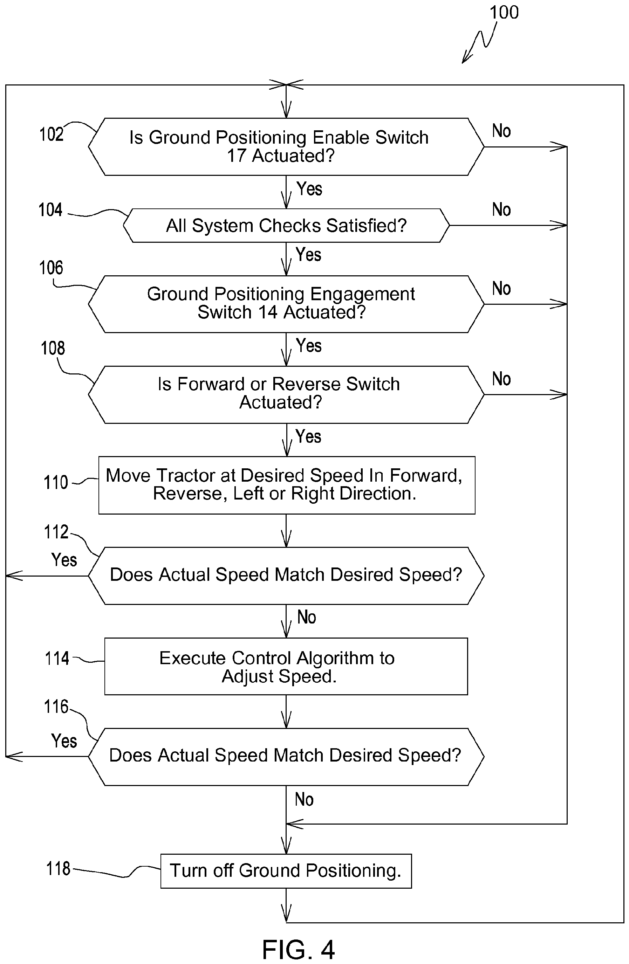

The electronic controller 20 executes an algorithm 100 represented by a flow chart in Fig. 4. The conversion of the flow chart into a standard language for implementing the algorithm described in a microprocessor of the electronic controller 20, will be evident to one with ordinary skill in the art.

In step 102, the electronic controller 20 determines if a positioning enable switch 17 in the operator station of the agricultural tractor 13 is actuated.

If the positioning enable switch 17 is actuated, then in step 104 the electronic controller 20 determines if one or more of the system checks are satisfied.

If the system checks are satisfied, then in step 106 the electronic controller 20 determines if positioning engagement switch 14 is actuated at the rear of the agricultural tractor 13.

If the positioning engagement switch 14 is actuated, then in step 108 the electronic controller 20 determines if either the forward, reverse, left or right switch 15, 16, 19 or 21 at the rear of the agricultural tractor 13 is actuated.

In step 110, if the forward or reverse switch 15 or 16 is actuated, the electronic controller 20 commands the propulsion system to move the agricultural tractor 13 in forward or reverse at the desired ground speed. Also in step 110, in response to manipulation of one of the left and right switches 19 and 21, the electronic controller 20 will cause the electro-hydraulic brake control valve 80 to brake one of the driven wheels 56L or 56R while the propulsion system rotates the opposite driven wheel 56L or 56R. This will cause the agricultural tractor 13 to pivot slightly using the braked driven wheel 56L or 56R as a pivot point effecting an arcuate movement of the three-point hitch 18 to align with the implement (not shown) in order to install and secure a hitch pin.

By means of the electro-hydraulic steering control valve 70, electronic controller 20 can also turn the steerable wheels 74L and 74R to assist in the left to right movement in response to manipulation of one of the left and right switches 19 and 21. This can be done either while stationary or while the agricultural tractor 13 is commanded to move forward or reverse by the forward or reverse switches 15 or 16. Preferably, the electronic controller 20 will include limits which will determine at what point a directional command (left or right) causes both a braking of a single driven wheel 56L or 56R and a steering angle change of the steerable wheels 74L and 74R to be performed. Optionally, the electronic controller 20 also may trigger an audible warning and/or a short delay time before commanding the agricultural tractor 13 to move in forward or reverse.

In step 112 the electronic controller 20 then determines if the actual ground speed of the agricultural tractor 30 detected by first rotation speed sensor 44 matches the desired ground speed.

If it does not match the desired ground speed, in step 114 the electronic controller 20 adjusts the actual ground speed. For example, a PID control algorithm (not shown), or other similar control algorithm, is used to adjust the actual ground speed toward the desired ground speed.

In step 116, the electronic controller 20 then determines if the actual ground speed detected by a second rotation speed sensor 48 matches the desired ground speed. If it does not match the desired ground speed, the electronic controller 20 turns off the positioning in step 118. For example, the electronic controller 20 commands the multi-speed gear transmission 54 to move to a neutral position. Alternatively, the electronic controller 20 shuts down the engine 51 by various means such as shutting off fuel flow with a solenoid, or grounding the engine ignition.

During operation of the positioning system 10, the electronic controller 20 monitors the status of the positioning enable switch 17 in the operator station, one or more of the system checks, the positioning engagement switch 14, and the forward, reverse, left and right switches 15, 16, 19 and 21 at the rear of the agricultural tractor 13. If none of the switches 15, 16, 19 or 21 is actuated, or any of the system checks are not satisfied, the electronic controller 20 turns off positioning as shown in step 118.

To move the agricultural tractor 13 using the positioning system 10, the operator must continuously actuate the positioning controls 11 which require the operator to remain in direct contact with the positioning controls 11 on the agricultural tractor 13. The operator actuates the positioning controls 11 while standing near the rear of the agricultural tractor 13, after exiting the operator station. If the operator discontinues contact with the positioning controls 11 on the agricultural tractor 13, the positioning system 10 will cause the agricultural tractor 13 to stop moving.

An operator may actuate either of switches 15, 16, 19 or 21 to move the agricultural tractor 13 slowly forward, backward, left or right into a position, wherein the operator can connect an implement to the three-point hitch 18 of the agricultural tractor 13. The positioning system 10 is supplemental to the operator station controls, and may be used for moving the agricultural tractor 13 for short distances, typically less than about 0.5 meters. Although the positioning controls 11 in a preferred embodiment are located at the rear of the agricultural tractor 13, the positioning controls 11 also may be mounted at the front of the agricultural tractor 13 for the purpose of moving the agricultural tractor 13 a short distance in position to connect an implement to a front three-point hitch.

The actual ground speed of the agricultural tractor 13 when operating the positioning system 10 may be fixed at a desired ground speed of below about 25 mm per second and preferably about 10 mm per second. For example, the positioning system 10 may specify and set the actual ground speed of the agricultural tractor 13 below any ground speed normally attainable by the operator using the forward and reverse pedals 22 and 24 in the operator station. Alternatively, the actual ground speed with the positioning system 10 may be variable from zero up to a preset maximum safe ground speed for positioning while the operator is off the agricultrual tractor 13. The maximum allowable ground speed may be independent of engine speed, or of multi-speed gear transmission 54 gear selection.

The actual ground speed of the agricultural tractor 13 may be sensed by first and second rotation speed sensors 44 and 48 which provide feedback signals to electronic controller 20 so that the selected ground speed is maintained regardless of the multi-speed gear transmission 54 gear selection or engine speed. For example, the desired ground speed may be variable between a minimum ground speed of zero and a maximum of not more than about 25 millimeter per second.

Forward and reverse switches 15 and 16 may be moved by the operator to actuate a speed limiting potentiometer (not shown) that is signal-connected to electronic controller 20. The electronic controller 20 may be programmed to send a proportional speed signal, in response to, and proportional to, a signal from the speed limiting potentiometer, to the respective solenoid 31 or 34, depending on which switch 15 or 16 is actuated. The proportional speed signal may range from a zero speed signal up to the pre-programmed maximum speed signal corresponding to the maximum travel or position of the forward and reverse switches 15 and 16.

Alternatively, positioning controls 11 also include positioning engagement switch 14 which the operator must engage at the same time as the forward or reverse switch 15 or 16 while the operator is out of the operator station. The proportional speed signal may range from a zero speed signal up to the pre-programmed maximum speed signal corresponding to the maximum travel or position of the positioning engagement switch 14.

The positioning system 10 comprises first rotation speed sensor 44, such as a Hall effect sensor, which is arranged adjacent a rotating part of multi-speed gear transmission 54, such as gear 46 that rotates in direct proportion to the actual ground speed. Electronic controller 20 receives a frequency signal from first rotation speed sensor 44 indicating the actual ground speed, and compares it to the desired ground speed. If the actual ground speed is not the same as the desired ground speed, the electronic controller 20 then adjusts the output speed signal to the solenoids 31 and 34 using a PID control algorithm to reach the desired ground speed. Alternatively, other control algorithms may be used to reach or approach the desired ground speed.

Optionally, second rotation speed sensor 48, such as a Hall effect sensor, is arranged adjacent another rotating part of the multi-speed gear transmission 54, such as gear 49 that also rotates in direct proportion to the actual ground speed. The second rotation speed sensor 48 is used to verify that the actual ground speed is not different from the desired ground speed. For example, if the second rotation speed sensor 48 indicates a difference, the electronic controller 20 provides a command to ignition module 55 to discontinue operation of the positioning or stop the engine 51.

Alternatively, ground speed detection and feedback may be accomplished by a hydrostatic pump displacement control system (not shown). This control system may control the angle of a swash plate of the hydrostatic pump using an angle sensor, which may be indicative of the actual ground speed of the agricultural tractor.

Additionally, the positioning system 10 is enabled by positioning enable switch 17 located in the operator station of the agricultural tractor 13. Electronic controller 20 includes logic requiring the operator to actuate the positioning enable switch 17 in the operator station before actuating any of the positioning controls 11 at the rear of the agricultural tractor 13. Additionally, while the operator is actuating the positioning controls 11 at the rear of the agricultural tractor 13, the positioning system 10 disables the operator station controls including the forward and reverse pedals 22 and 24. After the operator discontinues actuating the positioning controls 11, the operator station controls then can be used. Vice versa, the operator station controls disable the positioning controls 11.

The positioning sysem 10 can also be used to forward or reverse the tractor position within a distance using sensors or timers to assure safety. Additionally, the positioning sysem 10 could also be integrated with a suspension system used on modern agricultural tractors. In this arrangement, the operator could affect a side-to-side or fore-aft positioning, shaking or rocking motion of the agricultural tractor to cause a misaligned hitch pin to drop into place. An alternative to having fender mounted positioning controls 11 would be to provide a hand-held device similar to those used to remotely operate lifting devices such as an overhead crane. With the advances in wireless technologies, a positioning system 10 of this nature could be operated from many locations.

Alternatively, the positioning system may be used with an agricultural tractor having one or more electric wheel motors instead of a hydrostatic transmission. The operator may actuate the positioning controls at the rear of the agricultural tractor, causing the electronic controller to provide speed commands to each electric wheel motor to rotate at the desired ground speed, and to provide steering commands to a steering system. In another alternative embodiment, the positioning system may be used with a directional reversing transmission that uses electronically controlled forward and reverse clutches, by modulating current to the clutches while the transmission is in the lowest gear.

## Claims

1. A positioning system of an agricultural tractor, the positioning system (10) comprises positioning controls (11) on the agricultural tractor (13) outside an operator station of the agricultural tractor (13) and adjacent to a hitch (18), the positioning controls (11) including a forward switch (15), a reverse switch (16), a left switch (19) and a right switch (21); and an electronic controller (20) electrically connected to the positioning controls (11) and connected to a propulsion and steering system of the agricultural tractor (13), the electronic controller (20) moving the agricultural tractor (13) forward in response to actuation of the forward switch (15), the electronic controller (20) moving the agricultural tractor (13) reverse in response to actuation of the reverse switch (16), the electronic controller (20) steering the agricultural tractor (13) left in response to actuation of the left switch (19), and the electronic controller (20) steering the agricultural tractor (13) right in response to actuation of the right switch (21), **characterized in that** the steering system comprises an electro-hydraulic brake control valve (80) which is operable to brake one of a pair of driven wheels (56L, 56R) while the other driven wheel (56R, 56L) is rotating, the electronic controller (20) causing the electro-haydraulic brake control valve (80) to brake one of the driven wheels (56L, 56R) in response to actuation of one of the left and right switches (19, 21).

2. The positioning system according to claim 1, **characterized in that** the forward switch (15), the reverse switch (16), the left switch (19) and the right switch (21) being positioned on a rear fender (12) adjacent to the hitch (18).

3. The positioning system according to claim 1 or 2, **characterized in that** the steering system comprises an electro-hydraulic steering control valve (70) which is operable to turn steerable wheels (74L, 74R), the electronic controller (20) causing the electro-hydraulic steering control valve (70) to turn the steerable wheels (74L, 74R) in response to actuation of one of the left and right switches (19, 21).

## Patentansprüche

1. Positionierungssystem für einen landwirtschaftlichen Traktor, wobei das Positionierungssystem (10) Folgendes umfasst:
Positionierungssteuerelemente (11) auf dem landwirtschaftlichen Traktor (13) außerhalb einer Bedienstation des landwirtschaftlichen Traktors (13) und nahe an einem Heckkraftheber (18), wobei die Positionierungssteuerelemente (11) einen Vorwärtsschalter (15), einen Rückwärtsschalter (16),
einen Linksschalter (19) und einen Rechtsschalter (21) beinhalten; und eine elektronische Steuerung (20), die elektrisch mit den Positionierungssteuerelementen (11) verbunden ist und mit einem Vortriebs- und Lenksystem des landwirtschaftlichen Traktors (13) verbunden ist,
wobei die elektronische Steuerung (20) den landwirtschaftlichen Traktor (13) als Reaktion auf Betätigung des Vorwärtsschalters (15) vorwärts bewegt,
die elektronische Steuerung (20) den landwirtschaftlichen Traktor (13) als Reaktion auf Betätigung des Rückwärtsschalters (16) rückwärts bewegt, die elektronische Steuerung (20) den landwirtschaftlichen Traktor (13) als Reaktion auf Betätigung des Linksschalters (19) nach links lenkt und die elektronische Steuerung (20) den landwirtschaftlichen Traktor (13) als Reaktion auf Betätigung des Rechtsschalters (21) nach rechts lenkt,
**dadurch gekennzeichnet, dass** das Lenksystem ein elektrohydraulisches Bremssteuerventil (80) umfasst,
das betrieben werden kann, eines von einem Paar von angetriebenen Rädern (56L, 56R) abzubremsen, während sich das andere angetriebene Rad (56R, 56L) dreht,
wobei die elektronische Steuerung (20) das elektrohydraulische Bremssteuerventil (80) veranlasst,
eines der angetriebenen Räder (56L, 56R) als Reaktion auf Betätigung eines des Links- und des Rechtsschalters (19, 21) abzubremsen.

2. Positionierungssystem nach Anspruch 1, **dadurch gekennzeichnet, dass** der Vorwärtsschalter (15), der Rückwärtsschalter (16), der Linksschalter (19) und der Rechtsschalter (21) nahe am Heckkraftheber (18) auf einer Heckradabdeckung (12) positioniert sind.

3. Positionierungssystem nach Anspruch 1 oder 2, **dadurch gekennzeichnet, dass** das Lenksystem ein elektrohydraulisches Lenksteuerventil (70) umfasst, das betrieben werden kann zum Einschlagen lenkbarer Räder (74L, 74R), wobei die elektronische Steuerung (20) das elektrohydraulische Lenksteuerventil (70) veranlasst, die lenkbaren Räder (74L, 74R) als Reaktion auf Betätigung eines des Links- und Rechtsschalters (19, 21) einzuschlagen.

## Revendications

1. Système de positionnement d'un tracteur agricole, le système de positionnement (10) comprenant des commandes de positionnement (11) sur le tracteur agricole (13) à l'extérieur d'un poste d'opérateur du tracteur agricole (13) et adjacentes à un attelage (18), les commandes de positionnement (11) comprenant un commutateur avant (15), un commutateur arrière (16), un commutateur gauche (19) et un commutateur droit (21) ; et un dispositif de commande électronique (20) connecté électriquement aux commandes de positionnement (11) et connecté à un système de propulsion et de direction du tracteur agricole (13), le dispositif de commande électronique (20) déplaçant le tracteur agricole (13) vers l'avant en réaction à l'actionnement du commutateur avant (15), le dispositif de commande électronique (20) déplaçant le tracteur agricole (13) vers l'arrière en réaction à l'actionnement du commutateur arrière (16), le dispositif de commande électronique (20) dirigeant le tracteur agricole (13) vers la gauche en réaction à l'actionnement du commutateur gauche (19), et le dispositif de commande électronique (20) dirigeant le tracteur agricole (13) vers la droite en réaction à l'actionnement du commutateur droit (21), **caractérisé en ce que** le système de direction comprend une soupape de commande de frein électrohydraulique (80) qui peut être mise en oeuvre pour freiner l'une d'une paire de roues menées (56L, 56R) tandis que l'autre roue menée (56R, 56L) tourne, le dispositif de commande électronique (20) amenant la soupape de commande de frein électrohydraulique (80) à freiner l'une des roues menées (56L, 56R) en réaction à l'actionnement de l'un des commutateurs gauche et droit (19, 21).

2. Système de positionnement selon la revendication 1, **caractérisé en ce que** le commutateur avant (15), le commutateur arrière (16), le commutateur gauche (19) et le commutateur droit (21) sont positionnés sur un pare-chocs arrière (12) de manière adjacente à l'attelage (18).

3. Système de positionnement selon la revendication 1 ou 2, **caractérisé en ce que** le système de direction comprend une soupape de commande de frein électrohydraulique (70) qui peut être mise en oeuvre pour tourner des roues directrices (74L, 74R), le dispositif de commande électronique (20) amenant la soupape de commande de frein électrohydraulique (70) à tourner les roues directrices (74L, 74R) en réaction à l'actionnement de l'un des commutateurs gauche et droit (19, 21).
